# EUROPÄISCHE PATENTSCHRIFT

(11) **EP 0 594 043 B1**
(45) Veröffentlichungstag und Bekanntmachung des Hinweises auf die Patenterteilung: **30.06.1999**
(21) Anmeldenummer: 93116519.5
(22) Anmeldetag: 13.10.1993
(51) Int. Cl.: G11B 19/02, G11B 19/12

(54) **Gerät für ein plattenförmiges optisches Speichermedium**
Apparatus for optical record carrier having a disc shape
Appareil pour support d'enregistrement en forme de disque

(30) Priorität: 21.10.1992 DE 4235399
(43) Veröffentlichungstag der Anmeldung: 27.04.1994
(60) Teilanmeldung: 98118258.7
(73) Patentinhaber: Blaupunkt-Werke GmbH, 31132 Hildesheim (DE)
(72) Erfinder: Baas, Dieter, D-77694 Auenheim (DE)

(56) Entgegenhaltungen:
- EP-A- 0 331 839
- DE-A- 4 033 318
- US-A- 4 742 508
- US-A- 4 797 869
- PATENT ABSTRACTS OF JAPAN vol. 15, no. 237 (P-1216) 19. Juni 1991 & JP-A-03 073 467 (CLARION CO LTD) 28. März 1991
- PATENT ABSTRACTS OF JAPAN vol. 11, no. 144 (P-571) 12. Mai 1987 & JP-A-61 280 073 (CANON INC) 10. Dezember 1986
- PATENT ABSTRACTS OF JAPAN vol. 5, no. 185 (P-91) 25. November 1981 & JP-A-56 114 160 (PIONEER ELECTRONIC CORPORATION) 8. September 1981

## Beschreibung

Die Erfindung betrifft ein Gerät für ein plattenförmiges optisches Speichermedium nach der Gattung des Hauptanspruchs.

Bei Geräten zur Wiedergabe und gegebenenfalls auch zur Aufnahme von Informationen von optischen Speichermedien bzw. auf optische Speichermedien, insbesondere sogenannten Compact-Discs (CDs), sind verschiedene Einrichtungen zum motorischen Einziehen oder Ausschieben des Speichermediums vorgesehen. Mit Hilfe dieser Einrichtungen gelangt das Speichermedium von einer Einführöffnung in die Arbeitsposition im Wirkungsbereich einer optischen Abtasteinrichtung. Insbesondere bei Geräten, die für einen mobilen Einsatz, beispielsweise in einem Kraftfahrzeug, konzipiert sind, ist diese Einzug- und Ausschubmechanik aufgrund der beengten Platzverhältnisse besonders kompakt und komplex ausgelegt.

Zum Auslösen von Schaltvorgängen ist das Erkennen von einer oder mehreren Zwischenpositionen des Speichermediums während des Einzugs bzw. des Ausschubs erforderlich. Dazu werden bei bekannten Geräten aus jeweils einem optischen Sender und einem optischen Empfänger bestehende Lichtschranken verwendet, deren Bestandteile auf beiden Seiten des Weges des Speichermediums angeordnet sind. Dazu ist eine zusätzliche Leiterplatte mit zusätzlichen Leitungen zu einer Hauptleiterplatte erforderlich, was sich negativ auf die Herstellungskosten auswirkt.

Aus der Druckschrift EP 0 331 839 A2 ist ein Plattenspieler mit Ladeautomatik bekannt, der ein Erkennungssystem zur Verhinderung der Einführung einer Compact-Disc umfaßt, die kleiner als die herkömmliche Platte ist. Der Plattenspieler umfaßt Förderrollen zur Beförderung der Platte in eine Plattenspielposition und zur Rückbeförderung der Platte in eine Platteneinführungsposition. Der Plattenspieler umfaßt weiterhin eine erste Detektionsvorrichtung in der Nähe der Förderrollen zur Erkennung der Anwesenheit oder Abwesenheit einer Datenaufzeichnungsplatte, eine zweite Vorrichtung zur Detektion für den Fall, daß eine Datenaufzeichnungsplatte in die Plattenspielposition geladen ist und eine Steuervorrichtung zur Kontrolle der Bewegung der Förderrollen in Vorwärts- oder Rückwärtsrichtung, wobei die Steuervorrichtung die Bewegung der Förderrollen in Vorwärtsrichtung abbricht, wenn beim Laden einer Datenaufzeichnungsplatte die Erkennung der Anwesenheit der Platte durch die erste Detektionsvorrichtung unterbrochen wird, bevor die zweite Detektionsvorrichtung den Abschluß des Ladevorgangs der Platte detektiert.

Aufgabe der vorliegenden Erfindung ist es, ein Gerät für ein plattenförmiges optisches Speichermedium vorzuschlagen, bei dem mehrere Zwischenpositionen des Speichermediums beim Einziehen oder Ausschieben mit möglichst geringem technischen Aufwand erkannt werden können.
Das erfindungsgemäße Gerät mit den kennzeichnenden Merkmalen des Hauptanspruchs hat den Vorteil, daß auch die zum Erkennen der Zwischenpositionen erforderlichen Bauteile auf der Haupt-Leiterplatte - im folgenden Hauptplatine genannt - angeordnet sein können. Die ausgezeichneten Reflektionseigenschaften des optischen Speichermediums auf der Abtastseite ermöglichen eine Verwendung von üblichen Reflexionslichtschranken ohne besondere optische Einrichtungen, wie beispielsweise besondere Sammellinsen.
Vorzugsweise sind Infrarot-Lichtschranken geeignet. Es können im Rahmen der Erfindung jedoch auch Lichtschranken im sichtbaren Bereich verwendet werden. Um ein Ansprechen der Reflexionslichtschranke bei Abwesenheit des Speichermediums zu verhindern, können der Reflexionslichtschranke gegenüberliegende Teile des Gerätes mit dunkler Oberfläche versehen sein.
Ein weiterer Vorteil des erfindungsgemäßen Gerätes besteht darin, daß ohne einen zusätzlichen Detektor erkannt werden kann, ob das Speichermedium falsch eingelegt wurde. Diese geschieht dann bereits vor einem Versuch, das Speichermedium abzutasten.

Eine vorteilhafte Ausführungsform des erfindungsgemäßen Gerätes mit einer antreibbaren Walze zur Bewegung des Speichermediums senkrecht zur Drehachse besteht darin, daß ein Antrieb der Walze mit Hilfe der Reflexionslichtschranke einschaltbar ist, wenn das Speichermedium beim Zuführen in den Wirkungsbereich der Walze gelangt.

Bei dieser Ausführungsform ist vorzugsweise vorgesehen, daß ferner die Reflexionslichtschranke derart angeordnet ist, daß der Antrieb der Walze bei einer Bewegung in umgekehrter Richtung zum Zwecke eines Ausschubs des Speichermediums abgeschaltet wird, bevor die Walze das Speichermedium freigibt. Damit wird der Vorteil erzielt, daß die Speicherplatte bis zu einer manuellen Entnahme von der Walze festgehalten wird und nicht aus der Einführungsöffnung herausfällt. Beim Einführen des Speichermediums in ein Gerät gemäß dieser Ausführungsform gleitet das Speichermedium über die noch stehende Walze bis durch die Wirkung der Reflexionslichtschranke der Antrieb für die Walze eingeschaltet wird. Dieses Gleiten bedeutet jedoch meist keinen Nachteil, da die Walze ohnehin derart ausgelegt ist, daß eine Beschädigung des Speichermediums ausgeschlossen ist.

Eine Ausführungsform besteht darin, daß ein Spiegel der Reflexionslichtschranke gegenüber derart angeordnet ist, daß ein von der Reflexionslichtschranke ausgehender und den Weg des Speichermediums ein erstes Mal kreuzender Lichtstrahl an dem Spiegel reflektiert wird und nach einem zweiten Kreuzen des Wegs des Speichermediums auf einen Lichtempfänger trifft. Dadurch ist es möglich, mit nur einem zusätzlichen Lichtempfänger, beispielsweise einem Phototransistor, das Speichermedium an einer zweiten Zwischenposition zu detektieren.

Bei dieser Weiterbildung ist vorzugsweise vorgesehen, daß der Lichtstrahl den Weg des Speichermediums zu beiden Seiten der Walze je einmal kreuzt. Dadurch wird in einfacher Weise möglich, daß beim Einführen des Speichermediums der Antrieb der Walze bereits eingeschaltet wird, bevor das Speichermedium den Erfassungsbereich der Walze erreicht. Dadurch wird dem Benutzer eine "angenehmere" Einzugaufnahme geboten. Beim Ausschieben des Speichermediums kann der Antrieb der Walze bereits angehalten werden, bevor die Walze das Speichermedium freigibt.

Befindet sich das Speichermedium in einer zur Drehachse konzentrischen Position, so ist eine relative Bewegung in Richtung auf einen Drehteller und eine Abtasteinrichtung erforderlich. Dieses kann durch ein Absenken des Speichermediums oder eine entsprechende Gegenbewegung des Drehtellers und der Abtasteinrichtung erfolgen. In beiden Fällen ist es erforderlich, den Antrieb der Walze beim Erreichen der konzentrischen Position abzuschalten und die Relativbewegung in Richtung auf den Drehteller auszulösen. Hierzu ist bei einer anderen Ausbildung des erfindungsgemäßen Gerätes vorgesehen, daß die Zwischenposition der Lage des Speichermediums in der Drehachse entspricht.

Eine andere Ausführungsform des erfindungsgemäßen Gerätes besteht darin, daß sowohl für eine Zwischenposition, welche das optische Speichermedium zunächst bei manueller Zuführung erreicht, als auch für eine Zwischenposition, in welcher sich das Speichermedium in der Drehachse befindet, je eine Reflexionslichtschranke vorgesehen ist.

Um die Toleranzen bei der Erkennung der Zwischenposition möglichst klein zu halten, sollten der Sender und der Empfänger der Reflexionslichtschranke dicht nebeneinander angeordnet sein. Um dabei ein Übersprechen zwischen dem Sender und dem Empfänger zu vermeiden, ist bei einer anderen Weiterbildung der Erfindung vorgesehen, daß bei der Reflexionslichtschranke die Abstrahlebene vor der Detektionsebene liegt.

Eine relativ große Entfernung zwischen dem die Reflexionslichtschranke bildenden Bauelement und dem reflektierenden Speichermedium ist gemäß einer anderen Weiterbildung dadurch möglich, daß die Reflexionslichtschranke pulsierend betrieben wird.

Im Rahmen der Erfindung ist auch eine analoge Auswertung der Signale der Reflexionslichtschranke möglich, etwa um den Ansprechpunkt genau einstellen zu können. Dazu kann entweder das Ausgangssignal des Empfängers als Analogsignal mit einem vorgebbaren Schwellwert verglichen werden. Es kann jedoch auch die Lichtintensität des Senders zeitabhängig gesteuert und der Zeitpunkt des als Schaltsignal auftretenden Ausgangssignals des Empfängers ausgewertet werden.

Eine vorteilhafte Ausbildung des erfindungsgemäßen Gerätes besteht darin, daß die Reflexionslichtschranke auf einer die weiteren elektronischen Bauteile des Gerätes tragenden Leiterplatte angeordnet ist. Insbesondere für das Abspielen von 8cm-Compact-Discs kann in vorteilhafter Weise vorgesehen sein, daß eine Reflexionslichtschranke zum Erkennen der Größe des Speichermediums vorgesehen ist.

Ausführungsbeispiele der Erfindung sind in der Zeichnung anhand mehrerer Figuren dargestellt und in der nachfolgenden Beschreibung näher erläutert. Es zeigt:
- Fig. 1: eine schematische Darstellung eines erfindungsgemäßen Gerätes als Draufsicht,
- Fig. 2: ebenfalls in schematischer Darstellung einen Schnitt durch ein erfindungsgemäßes Gerät,
- Fig. 3: ein Blockschaltbild mit einer Schaltungsanordnung in einem erfindungsgemäßen Gerät und
- Fig. 4: ein Ablaufdiagramm zur Steuerung des Einzugs eines Speichermediums in ein erfindungsgemäßes Gerät.

Gleiche Teile sind in den Figuren mit gleichen Bezugszeichen versehen. Die Ausführungsbeispiele gehen von bekannten CD-Laufwerken aus, so daß es zur Erläuterung der Ausführungsbeispiele nicht erforderlich ist, das gesamte Laufwerk zu beschreiben, sondern lediglich die zum Verständnis der Erfindung erforderlichen Teile.

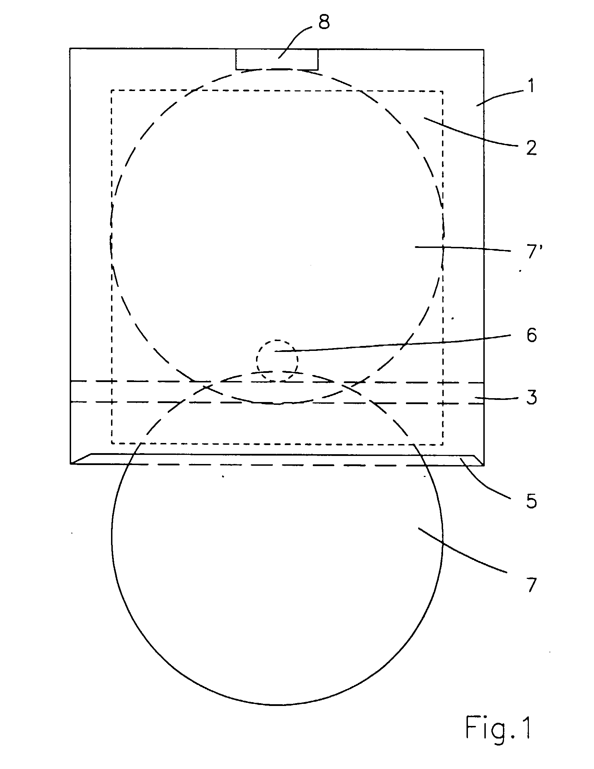

Innerhalb des Laufwerk-Chassis 1 bei dem Gerät nach Fig. 1 ist eine Leiterplatte 2 angeordnet, auf der sich alle wesentlichen elektronischen Bauelemente befinden. Zum Einziehen bzw. Ausschieben sind Walzen 3 vorgesehen, welche die Platte 7 nach einem manuellen Einführen erfassen und in die gestrichelt dargestellte Position 7' bringen. Je nach Ausführungen im einzelnen können zu beiden Seiten der Platte Walzen angeordnet sein, es kann jedoch auch lediglich eine antreibbare Walze vorgesehen sein, wobei die Platte an einer am oberen Teil des Chassis 1 befindlichen Führung gleitet.

Soll eine Platte abgespielt werden, so wird sie von Hand zwischen den Walzen 3 hindurchgesteckt, so daß das vom Sender einer Reflexionslichtschranke 6 ausgestrahlte Licht zu dem Empfänger der Reflexionslichtschranke reflektiert wird. Dadurch wird ein Antriebsmotor für die Walzen 3 eingeschaltet und die Platte 7 in die Position 7' bewegt.

Dabei stößt sie gegen einen Anschlag 8, der derart angeordnet ist, daß sich die Platte dann noch mit ihrem Rand zwischen den Walzen 3 und konzentrisch über einem in Fig. 1 nicht dargestellten Drehteller befindet. Durch Absenken der einen Walze wird die Platte auf den Drehteller aufgelegt.

Die Oberfläche der Walzen 3 sowie deren Andruckkraft auf die Platte sind derart ausgelegt, daß ein Gleiten zwischen Platte und Walzen, das bei dem in Fig. 1 dargestellten Ausführungsbeispiel beim manuellen Einführen und beim Erreichen des Anschlags 8 nicht zu vermeiden ist, die Platte nicht beschädigt.

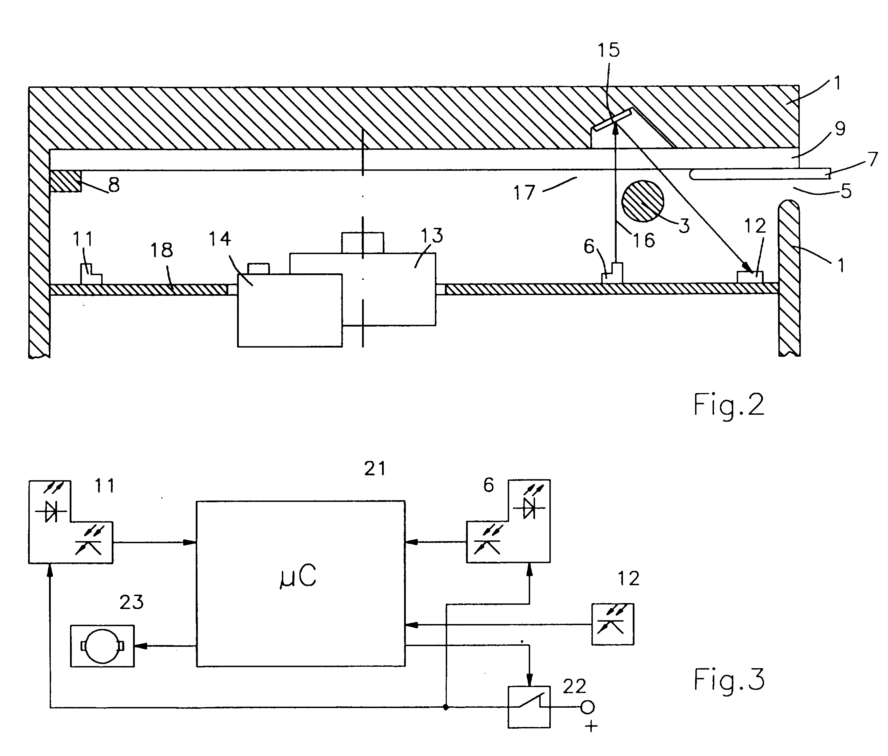

Nach Erreichen der Position 7' kann der Antrieb der Walzen 3 beispielsweise durch eine Zeitsteuerung abgeschaltet und das Absenken der Platte eingeleitet werden. Dieses kann jedoch auch mit Hilfe einer weiteren Reflexionslichtschranke erfolgen, was unter anderem im Zusammenhang mit Fig. 2 erläutert wird.

Fig. 2 zeigt in Form einer Schnittdarstellung einen Teil eines erfindungsgemäßen Gerätes mit einem Chassis 1, einer Einführungsöffnung 5 für die Platte 7, einer Walze 3 und einer Führung 9, auf welcher die Platte 7 beim Einzug entlang gleitet. Auf der Leiterplatte 1 - im folgenden Hauptplatine genannt - befinden sich eine Reflexionslichtschranke 6, eine weitere Reflexionslichtschranke 11 und ein Lichtempfänger 12. Weitere auf der Hauptplatine 18 befindliche Bauelemente und Baugruppen, insbesondere eine Steuereinheit, sind in Fig. 2 nicht dargestellt. Ein Drehteller 12, auf welchem die Platte 7 in ihrer Arbeitsposition aufliegt, und eine Abtasteinrichtung 14 sind lediglich angedeutet.

In dem oberen Teil des Chassis 1 ist ein Spiegel 15 angeordnet, der einen aus der Reflexionslichtschranke 6 austretenden Lichtstrahl (16) bei Abwesenheit der Platte 7 in Richtung auf den Photoempfänger 12 richtet. Dabei kreuzt der Lichtstrahl 16 den Weg 17 der Platte 7 einmal hinter und einmal vor der Walze 3.

Die Reflexionslichtschranken bestehen aus jeweils einer Leuchtdiode und einem Phototransistor. Zur Erzielung einer optischen Entkopplung ist die Leuchtdiode mit ihrer Austrittsfläche etwas vor bzw. oberhalb der Lichteintrittsfläche des Phototransistors angeordnet, wie es schematisch in Fig. 3 dargestellt ist. Die Phototransistoren sind mit Eingängen der Steuereinheit 21 verbunden, die im wesentlichen einen Mikrocomputer enthält.

Zur pulsierenden Stromversorgung der Leuchtdioden der Reflexionslichtschranken 6, 11 ist ein steuerbarer Schalter 22 vorgesehen, dessen Steuereingang mit einem Ausgang der Steuereinheit verbunden ist. Der pulsierende Betrieb der Reflexionslichtschranken 6, 11 kann beispielsweise derart erfolgen, daß die Pulsdauer bei einigen 100 µs liegt, während die Pulsfrequenz zwischen 20 Hz und 1000 Hz beträgt. Bei der Wahl der Pulsfrequenz ist die Einzug- und Ausschubgeschwindigkeit der Platte zu berücksichtigen. An die Steuereinheit 21 ist ferner ein Motor 23 zum Antrieb der Walze 3 angeschlossen. Einem weiteren Eingang der Steuereinheit 21 sind die Ausgangssignale des Lichtempfängers 12 zuführbar.

Beim manuellen Einschieben der Platte 7 wird zunächst der Lichtstrahl zum Lichtempfänger 12 unterbrochen. Dadurch wird der Antriebsmotor 23 der Walze 3 eingeschaltet und die Platte 7 eingezogen.

Die Reflexionslichtschranke 11 signalisiert, wenn die Platte 7 den Anschlag 8 erreicht. Dabei ist die Justierung der Reflexionslichtschranke 11 gegenüber dem Anschlag 8 nicht kritisch. Wird mit Hilfe der Reflexionslichtschranke 11 der Antrieb der Walze 3 in einem tolerierbaren Bereich vor dem Erreichen des Anschlags 8 abgeschaltet, so wird durch die Trägheit des Antriebs und der Walze 3 die Platte auf jeden Fall bis zum Anschlag 8 transportiert.

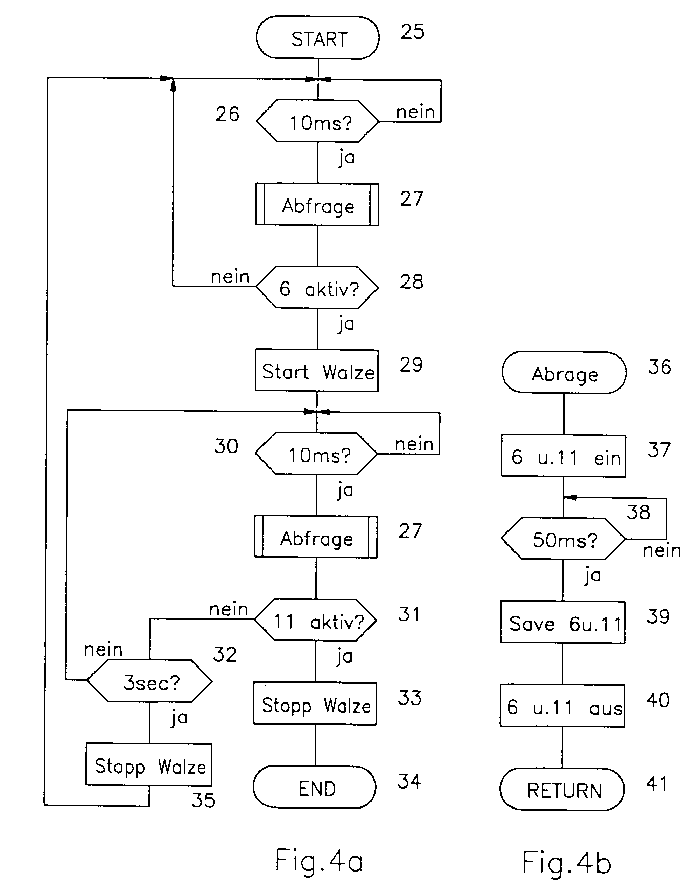

Fig. 4 zeigt ein Ablaufdiagramm für ein in der Steuereinheit 21 vorhandenes Programm zum Einzug der Platte. Dabei ist ein Hauptprogramm in Fig. 4a dargestellt, während sich Fig. 4b auf ein Unterprogramm zur Abfrage der Reflexionslichtschranken bezieht. Das Programm gemäß Fig. 4a wird bei 25 gestartet und durchläuft zunächst eine Verzögerungsschleife 26 für die Dauer von 10 ms. Danach wird bei 27 mit Hilfe des in Fig. 4b dargestellten Unterprogramms eine Abfrage der Reflexionslichtschranken durchgeführt. Bei 28 wird das Programm in Abhängigkeit davon verzweigt, ob die Reflexionslichtschranke 6 aktiv ist, d. h. ob reflektiertes Licht empfangen wird. Ist dieses nicht der Fall, werden die Programmteile 26, 27 und 28 solange wiederholt, bis eine Platte eingeführt ist und somit die Reflexionslichtschranke 6 aktiv wird. Dann wird bei 29 der Antrieb der Walze gestartet. Im Anschluß daran erfolgt bei 30 eine Verzögerung von 10 ms, worauf erneut das Unterprogramm 27 aufgerufen wird.

Bei 31 verzweigt sich das Programm in Abhängigkeit davon, ob die Reflexionslichtschranke 11 aktiv ist. Dieses ist nicht der Fall, wenn die Platte noch nicht die Reflexionslichtschranke 11 erreicht hat. Es wird dann bei 32 eine Verzweigung in Abhängigkeit von einer Verzögerungszeit von etwa 3 s vorgenommen. Ist die Verzögerungszeit noch nicht abgelaufen, werden die Programmteile 30, 27 und 31 solange wiederholt, bis die Reflexionslichtschranke 11 aktiv ist. Dann wird bei 33 der Antrieb der Walze abgeschaltet und das Programm bei 34 beendet.

Läuft jedoch die Verzögerungszeit bei 32 ab, ohne daß die Platte die Reflexionslichtschranke 11 erreicht hat, wird das Programm bei 35 mit dem Abschalten des Antriebs der Walze fortgesetzt. Danach geht das Programm in die von den Programmteilen 26, 27 und 28 gebildete Warteschleife. Das Abschalten des Antriebs der Walze nach der Verzögerungszeit erfolgt beispielsweise, wenn die Platte nach dem Einführen und Einschalten des Walzenantriebs festgehalten oder wieder herausgezogen wird.

Mit dem in Fig. 4b dargestellten Unterprogramm werden die Reflexionslichtschranken 6 und 11 abgefragt. Nach einem Start des Programms bei 36 werden bei 37 die Leuchtdioden der Reflexionslichtschranken eingeschaltet, worauf bei 38 eine Verzögerung von 50 µs erfolgt. Danach werden die Ausgangssignale der Empfänger der Reflexionslichtschranken bei 39 abgefragt und im Speicher abgelegt. Im Anschluß daran werden bei 40 die Leuchtdioden der Reflexionslichtschranken ausgeschaltet. Bei 41 wird das Unterprogramm zur Fortsetzung des Hauptprogramms verlassen.

## Patentansprüche

1. Gerät für ein plattenförmiges optisches Speichermedium (7), wobei das zugeführte Speichermedium (7) mindestens in einer Richtung senkrecht zu einer Drehachse bewegbar ist, um in eine Arbeitsposition im Wirkungsbereich einer optischen Abtasteinrichtung (14) zu gelangen, wobei mindestens eine Reflexionslichtschranke (6) auf der gleichen Seite des Speichermediums (7) wie die Abtasteinrichtung (14) angeordnet ist, wobei die Reflexionslichtschranke (6) die Ableitung eines Signals bewirkt, wenn das Speichermedium den Lichtstrahl der Reflexionslichtschranke (6) in einer von der Arbeitsposition verschiedenen Zwischenposition kreuzt, dadurch gekennzeichnet, daß ein Spiegel (15) auf der der Reflexionslichtschranke (6) abgewandten Seite des Speichermediums (7) im oberen Teil des Laufwerk-Chassis (1) des Gerätes derart angeordnet ist, daß ein von der Reflexionslichtschranke (6) ausgehender und den Weg (17) des Speichermediums (7) ein erstes Mal kreuzender Lichtstrahl (16) an dem Spiegel (15) reflektiert wird und nach einem zweiten Kreuzen des Weges (17) des Speichermediums (7) auf einen Lichtempfänger (12) trifft.

2. Gerät nach Anspruch 1 mit einer antreibbaren Walze zur Bewegung des Speichermediums (7) senkrecht zur Drehachse, dadurch gekennzeichnet, daß ein Antrieb der Walze (3) mit Hilfe der Reflexionslichtschranke (6) einschaltbar ist, wenn das Speichermedium (7) beim Zuführen in den Wirkungsbereich der Walze (3) gelangt.

3. Gerät nach Anspruch 2, dadurch gekennzeichnet, daß ferner die Reflexionslichtschranke derart angeordnet ist, daß der Antrieb der Walze (3) bei einer Bewegung in umgekehrter Richtung zum Zwecke eines Ausschubs des Speichermediums (7) abgeschaltet wird, bevor die Walze (3) das Speichermedium (7) freigibt.

4. Gerät nach Anspruch 2 oder 3, dadurch gekennzeichnet, daß der Lichtstrahl den Weg (17) des Speichermediums (7) zu beiden Seiten der Walze (3) je einmal kreuzt.

5. Gerät nach Anspruch 2, 3 oder 4, dadurch gekennzeichnet, daß in der Zwischenposition ein Randbereich des Speichermediums (7) im Bereich der Walze (3) liegt.

6. Gerät nach einem der Ansprüche 2 bis 5, dadurch gekennzeichnet, daß sowohl für eine Zwischenposition, welche das optische Speichermedium (7) zunächst bei manueller Zuführung erreicht, als auch für eine Zwischenposition, in welcher sich der Randbereich des Speichermediums (7) im Bereich der Walze (3) befindet, je eine Reflexionslichtschranke (6, 11) vorgesehen ist.

7. Gerät nach einem der vorhergehenden Ansprüche, dadurch gekennzeichnet, daß bei der Reflexionslichtschranke (6, 11) eine Lichtaustrittsfläche vor oder oberhalb einer Lichteintrittsfläche angeordnet ist.

8. Gerät nach einem der vorhergehenden Ansprüche, dadurch gekennzeichnet, daß die Reflexionslichtschranke (6; 11) pulsierend betrieben wird.

9. Gerät nach einem der vorhergehenden Ansprüche, dadurch gekennzeichnet, daß die Reflexionslichtschranke (6; 11) auf einer die weiteren elektronischen Bauteile des Gerätes tragenden Leiterplatte (18) angeordnet ist.

10. Gerät nach einem der vorhergehenden Ansprüche, dadurch gekennzeichnet, daß eine Reflexionslichtschranke zum Erkennen der Größe des Speichermediums vorgesehen ist.

11. Gerät nach einem der vorhergehenden Ansprüche, dadurch gekennzeichnet, daß eine analoge Auswertung der Signale der Reflexionslichtschranke erfolgt.

## Revendications

1. Appareil pour un support d'enregistrement optique en forme de disque, dans lequel le support d'enregistrement (7), que l'on amène, peut être déplacé au moins dans un sens perpendiculaire à un axe de rotation, pour arriver dans une position de fonctionnement dans la zone opérationnelle d'un dispositif de balayage optique (14), au moins une cellule photoélectrique à réflexion (6) étant disposée sur le même côté du support d'enregistrement (7) que le dispositif de balayage (14), la cellule photoélectrique à réflexion (6) provoquant la dérivation d'un signal, quand le support d'enregistrement croise le rayon lumineux de la cellule photoélectrique à réflexion (6) dans une position intermédiaire, différente de la position de fonctionnement,
caractérisé en ce que
un miroir (15) est disposé sur le côté du support d'enregistrement (7) qui est situé à l'opposé de la cellule photoélectrique à réflexion (6) dans la partie supérieure du châssis (1) du mécanisme d'entraînement de l'appareil d'une manière telle qu'un rayon lumineux, partant de la cellule photoélectrique à réflexion (6) et croisant une première fois le chemin (17) du support d'enregistrement (7) soit réfléchi sur le miroir (15) et après avoir croisé une deuxième fois le chemin (17) du support d'enregistrement (7) arrive sur un récepteur de lumière (12).

2. Appareil selon la revendication 1, avec un rouleau qui peut être entraîné pour déplacer le support d'enregistrement (7) perpendiculairement à l'axe de rotation,
caractérisé en ce que
on peut mettre en marche un mécanisme d'entraînement du rouleau (3) à l'aide de la cellule photoélectrique à réflexion (6), quand le support d'enregistrement (7) arrive lors de son amenée dans la zone opérationnelle du rouleau (3).

3. Appareil selon la revendication 2,
caractérisé en ce que
en outre la cellule photoélectrique à réflexion est disposée d'une manière telle que le mécanisme d'entraînement du rouleau (3) est débranché lors d'un mouvement en sens contraire dans le but d'extraire le support d'enregistrement (7), avant que le rouleau (3) ne libère le support d'enregistrement (7).

4. Appareil selon la revendication 2 ou 3,
caractérisé en ce que
le rayon de lumière croise respectivement une fois le chemin (17) du support d'enregistrement (7) des deux côtés du rouleau (3).

5. Appareil selon la revendication 2, 3 ou 4,
caractérisé en ce que
dans la position intermédiaire une zone de bordure du support d'enregistrement (7) se trouve dans la zone du rouleau (3).

6. Appareil selon l'une des revendications 2 à 5,
caractérisé en ce qu'
on prévoit respectivement une cellule photoélectrique à réflexion (6, 11) aussi bien pour une position intermédiaire, que le support d'enregistrement optique (7) atteint tout d'abord par introduction manuelle, que pour aussi une position intermédiaire, dans laquelle la zone de bordure du support d'enregistrement (7) se trouve dans la zone du rouleau (3).

7. Appareil selon l'une des revendications précédentes,
caractérisé en ce que
dans le cas de la cellule photoélectrique à réflexion (6, 11) une face de sortie de la lumière est disposée en avant ou au dessus d'une face d'entrée de la lumière.

8. Appareil selon l'une des revendications précédentes,
caractérisé en ce qu'
on fait fonctionner la cellule photoélectrique à réflexion (6; 11) de manière pulsée.

9. Appareil selon l'une des revendications précédentes,
caractérisé en ce que
la cellule photoélectrique à réflexion (6; 11) est disposée sur une carte à circuits imprimés (18) qui porte les autres composants électroniques de l'appareil.

10. Appareil selon l'une des revendications précédentes,
caractérisé en ce qu'
il est prévu une cellule photoélectrique à réflexion pour détecter la grandeur du support d'enregistrement.

11. Appareil selon l'une des revendications précédentes,
caractérisé en ce qu'
on procède à une exploitation analogique des signaux des cellules photoélectriques à réflexion.

## Claims

1. Apparatus for an optical storage medium (7) in disc form, the storage medium (7) fed in being moveable at least in a direction perpendicular to an axis of rotation in order to attain an operating position in the region of action of an optical scanning device (14), at least one reflected-light barrier (6) being arranged on the same side of the storage medium (7) as the scanning device (14), the reflected-light barrier (6) effecting the output conduction of a signal when the storage medium crosses the light beam of the reflected-light barrier (6) in an intermediate position that differs from the operating position, characterized in that a mirror (15) is arranged in the upper part of the drive chassis (1) of the apparatus on that side of the storage medium (7) which is remote from the reflected-light barrier (6), in such a way that a light beam (16) proceeding from the reflected-light barrier (6) and crossing the path (17) of the storage medium (7) a first time is reflected at the mirror (15) and, after crossing the path (17) of the storage medium (7) a second time, impinges on a light receiver (12).

2. Apparatus according to Claim 1 having a driveable roller for moving the storage medium (7) perpendicularly to the axis of rotation, characterized in that a drive of the roller (3) can be switched on with the aid of the reflected-light barrier (6) when the storage medium (7), on being fed in, reaches the region of action of the roller (3).

3. Apparatus according to Claim 2, characterized in that the reflected-light barrier is, furthermore, arranged in such a way that the drive of the roller (3) , in the event of a movement in the opposite direction for the purpose of ejecting the storage medium (7), is switched off before the roller (3) releases the storage medium (7).

4. Apparatus according to Claim 2 or 3, characterized in that the light beam crosses the path (17) of the storage medium (7) in each case once on both sides of the roller (3).

5. Apparatus according to Claim 2, 3 or 4, characterized in that in the intermediate position, an edge region of the storage medium (7) is situated in the region of the roller (3).

6. Apparatus according to one of Claims 2 to 5, characterized in that a respective reflected-light barrier (6, 11) is provided both for an intermediate position which is reached initially by the optical storage medium (7) in the event of manual feeding-in and for an intermediate position in which the edge region of the storage medium (7) is situated in the region of the roller (3).

7. Apparatus according to one of the preceding Claims, characterized in that, in the case of the reflected-light barrier (6, 11), a light exit face is arranged in front of or above a light entry face.

8. Apparatus according to one of the preceding Claims, characterized in that the reflected-light barrier (6; 11) is operated in a pulsating manner.

9. Apparatus according to one of the preceding Claims, characterized in that the reflected-light barrier (6; 11) is arranged on a printed circuit board (18) carrying the further electronic components of the apparatus.

10. Apparatus according to one of the preceding Claims, characterized in that a reflected-light barrier for identifying the size of the storage medium is provided.

11. Apparatus according to one of the preceding Claims, characterized in that analogue evaluation of the signals from the reflected-light barrier is carried out.
